# FASCICULE DE BREVET EUROPEEN

(11) **EP 3 912 882 B1**
(45) Date de publication et mention de la délivrance du brevet: **30.07.2025**
(21) Numéro de dépôt: 21174125.1
(22) Date de dépôt: 17.05.2021
(51) Int. Cl.: B61L 15/00, B61D 33/00

(54) **PROCÉDÉ DE CONTRÔLE DE L'OCCUPATION DES SIÈGES D'UN VÉHICULE PAR DES PASSAGERS ET DISPOSITIFS ASSOCIÉS**
VERFAHREN ZUR KONTROLLE DER SITZBELEGUNG EINES FAHRZEUGS DURCH PASSAGIERE UND ENTSPRECHENDE VORRICHTUNGEN
METHOD FOR CONTROLLING THE OCCUPANCY OF SEATS OF A VEHICLE BY PASSENGERS AND ASSOCIATED DEVICES

(30) Priorité: 18.05.2020 FR 2004944
(43) Date de publication de la demande: 24.11.2021
(73) Titulaire: ALSTOM Holdings, 93400 Saint-Ouen-sur-Seine (FR)
(72) Inventeur: SIMONI, Bastian, 94130 Nogent sur Marne (FR); JUNG, Luc, 69500 Bron (FR)
(74) Mandataire: Plasseraud IP

(56) Documents cités:
- EP-A1- 3 476 690
- WO-A1-2011/023481
- DE-A1- 102005 048 080
- KR-A- 20180 096 327
- US-A1- 2017 200 355
- US-A1- 2017 233 098

## Description

La présente invention concerne un procédé de contrôle de l'occupation des sièges d'un véhicule par des passagers. La présente invention se rapporte également à une liseuse d'un siège de véhicule et à un dispositif de communication associés.

Il est connu que le contrôle de l'occupation des sièges d'un véhicule, notamment d'un véhicule ferroviaire, soit réalisé par un agent dédié à cette fonction. Un tel procédé de contrôle implique donc une présence physique d'un agent au sein du véhicule.

Il est également connu qu'un tel contrôle puisse être effectué grâce à des capteurs tels que des capteurs intégrés dans les sièges ou des caméras de détection installées dans le compartiment passager pouvant reconnaître les passagers par analyse vidéo.

Le document EP 3 476 690 A1 divulgue un procédé de gestion de l'espace disponible et des sièges dans un système de transport de passagers.

Le document US 2017/200355 A1 divulgue un procédé de guidage d'un passager vers un siège disposé dans un véhicule.

Le document KR 2018 0096327 A divulgue un procédé de mise en garde de l'approche d'un véhicule ferroviaire.

Le document WO 2011/023481 A1 divulgue un procédé de communication entre un train et des dispositifs en bordure de voie.

Toutefois, un tel procédé requiert d'une part l'installation de capteurs spécifiques dans l'habitacle du véhicule, ces capteurs se devant d'impacter le moins possible le confort des passagers ou l'aspect esthétique au sein de l'habitacle. D'autre part les systèmes à base d'analyse vidéo nécessitent une bonne couverture visuelle du dispositif de caméra vidéo de l'ensemble des sièges.

De tels procédés sont complexes à mettre en oeuvre et/ou requièrent une intervention de personnel(s).

Il existe ainsi un besoin pour un procédé de contrôle de l'occupation des sièges d'un véhicule qui soit plus simple et qui requiert moins de ressources humaines et/ou matérielles.

Pour cela, la présente invention porte sur un procédé de contrôle de l'occupation des sièges d'un ou plusieurs véhicule(s) par des passagers à l'aide d'un dispositif de contrôle de l'occupation des sièges, le véhicule comprenant une pluralité de sièges équipés d'une liseuse, le dispositif de contrôle comprenant chaque liseuse, un système de contrôle des liseuses et un contrôleur, le procédé étant selon la revendication 1.

Suivant des modes de réalisation particuliers, le procédé est selon les revendications 2 à 6, prise(s) isolément ou suivant toutes les combinaisons techniquement possibles.

La présente demande divulgue également un système de liseuse du type comprenant une liseuse d'un siège d'un véhicule et un système de contrôle, le système de contrôle étant propre à commander la liseuse pour émettre des données relatives au siège à destination d'un appareil électronique d'un passager du véhicule, les données étant émises selon une technique de communication optique sans fil, la technique étant la technique de communication par lumière visible.

La présente invention concerne, en outre, un dispositif de contrôle de l'occupation des sièges d'un véhicule par des passagers, le véhicule comportant une pluralité de sièges équipés d'une liseuse, le dispositif de contrôle étant selon la revendication 7.

L'invention sera mieux comprise à la lecture de la description qui va suivre, donnée uniquement à titre d'exemple, et faite en se référant aux dessins annexés sur lesquels :
- la figure 1 est une représentation schématique d'un passager et d'une partie d'un véhicule comportant deux sièges et un dispositif de communication, et
- la figure 2 est un ordinogramme d'un exemple de mise en œuvre d'un procédé de contrôle de l'occupation des sièges de la figure 1 par le passager.

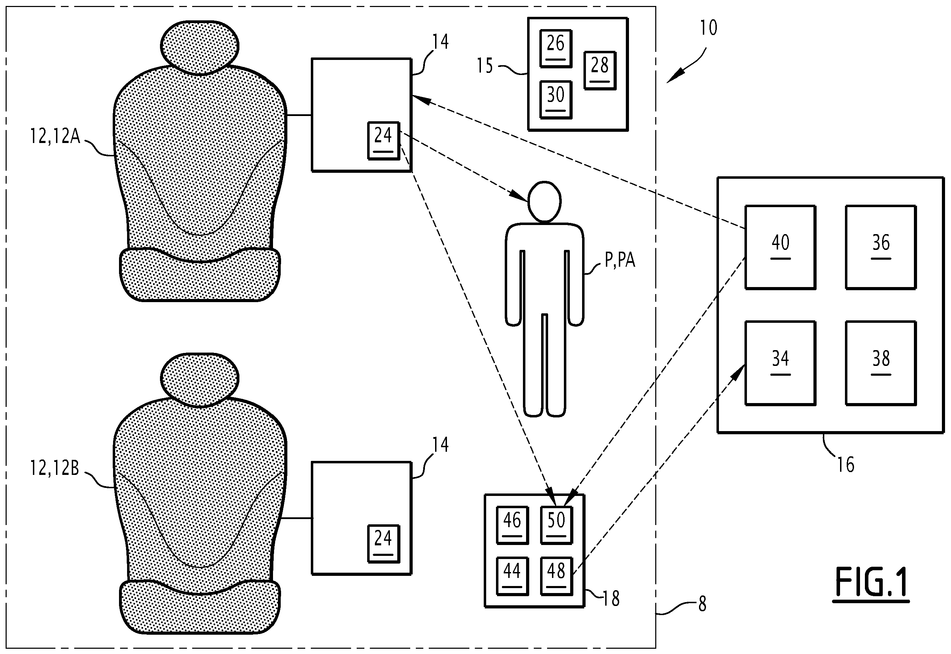

La figure 1 représente une partie d'un véhicule 8 et un passager P.

Le passager P est équipé d'un appareil électronique 18.

Le véhicule 8 est, par exemple, un véhicule ferroviaire tel qu'un train ou un tramway.

Le véhicule 8 comporte une pluralité de sièges 12 et un dispositif 10 de contrôle de l'occupation des sièges 12.

Le dispositif de contrôle 10 comprend un système de liseuse et un contrôleur 16. Le système de liseuse comporte une liseuse 14 associée à chaque siège 12 et un système de contrôle 15 des liseuses 14. Avantageusement le système de contrôle des liseuses est centralisé et propre à commander chaque liseuse.

En variante, le dispositif de contrôle comprend un système de contrôle 15 respectif pour chaque liseuse 14.

Dans la figure 1, par soucis de simplification, seuls deux sièges 12 sont représentés, sachant que tout nombre de siège peut être envisagé pour le véhicule 8.

Dans cet exemple, chaque siège 12 est réservable par un unique passager.

Un siège 12 est donc réservé lorsqu'il existe une association unique entre un passager et ledit siège 12.

Au moins une pluralité de sièges 12 du véhicule 8 sont équipés d'une liseuse 14 du dispositif de contrôle 10.

En particulier, les sièges 12 illustrés sur la figure 1 sont chacun équipés d'une liseuse 14. Les sièges 12 illustrés sur la figure 1 sont, par exemple, regroupés dans le véhicule 8.

Dans l'exemple de la figure 1, un premier siège 12A est distingué d'un deuxième siège 12B, les premier et deuxième sièges 12A et 12B étant en tout point identiques.

Dans l'exemple décrit, chaque liseuse 14 est identique, de sorte qu'une seule est décrite dans ce qui suit.

La liseuse 14 comprend une source lumineuse 24.

Dans l'exemple proposé, la source lumineuse 24 comprend au moins une diode électroluminescente.

Le système de contrôle 15 des liseuses 14 comprend une mémoire 26, un récepteur 28 et une unité de contrôle 30. Le système de contrôle 15 est propre à commander la source lumineuse 24 pour émettre des données selon une technique de communication optique sans fil.

Dans l'exemple décrit, la technique de communication est la technique de communication par lumière visible.

Comme son nom l'indique, la technique de communication par lumière visible transmet des données sous forme de signaux lumineux dont la longueur d'onde est dans la bande visible, c'est-à-dire comprise entre 400 nanomètres (nm) et 800 nm.

Une telle technique de communication est aussi connue sous l'acronyme VLC qui renvoie à la dénomination anglaise de « Visible light communication ».

Aussi, dans la suite, la technique de communication par lumière visible est simplement dénommée technique VLC.

La source lumineuse 24 est donc propre à émettre des signaux lumineux dans la bande visible.

En particulier, le système de contrôle 15 est propre à moduler le signal lumineux, par exemple, en amplitude et/ou en fréquence et/ou en phase.

Plus généralement, la source lumineuse 24 est propre à émettre un signal lumineux spécifique correspondant à au moins une donnée relative au siège 12 associé que l'on souhaite transmettre.

Selon l'exemple décrit, le système de contrôle 15 est propre à commander la source lumineuse 24 pour émettre la donnée relative au siège 12 à destination de l'appareil électronique 18, selon la technique VLC.

La donnée relative au siège 12 comprend un identifiant du siège 12.

Avantageusement, l'appareil électronique 18 est à même de recevoir et d'interpréter cette donnée afin de fournir des états associés au siège 12.

Selon un exemple, la donnée relative au siège comprend une donnée relative à un état du siège 12 pour le passager P.

La donnée relative à l'état du siège 12 est, par exemple, une donnée d'autorisation de l'utilisation du siège 12 par le passager P ou une donnée d'interdiction de l'utilisation du siège 12 par le passager P, ou avantageusement encore une donnée indicatrice de la non-réservation du siège 12.

Avantageusement, le système de contrôle 15 est propre à commander la source lumineuse 24 pour qu'elle émette une lumière présentant une couleur spécifique en fonction de la donnée relative au siège 12 émise et notamment de la donnée relative à l'état du siège 12 pour le passager P.

Ainsi, lorsque la donnée relative à l'état du siège est une donnée indicatrice de la non-réservation du siège 12, la source lumineuse 24 est propre à émettre une lumière que le passager P est capable de discerner, la lumière étant d'une première couleur.

Lorsque la donnée relative à l'état du siège est une donnée d'autorisation de l'utilisation du siège 12 par le passager P, la source lumineuse 24 est propre à émettre une lumière d'une deuxième couleur différente de la première couleur. La lumière émise est telle que le passager P est capable de la discerner et de la distinguer de la première couleur.

Lorsque la donnée relative à l'état du siège est une donnée d'interdiction de l'utilisation du siège 12 par le passager P, la source lumineuse 24 est propre à émettre une lumière d'une troisième couleur différente de la première couleur et de la deuxième couleur. La lumière émise est telle que le passager P est capable de la discerner et de la distinguer de la première couleur et de la deuxième couleur.

Les trois couleurs précités (première, deuxième et troisième couleurs) sont distinctes. A titre d'exemple particulier, la première couleur est le jaune, la deuxième couleur est le vert et la troisième couleur est le rouge.

Ainsi, la donnée relative au siège 12 émise par la source lumineuse 24 est propre à comprendre un identifiant du siège 12 et/ou l'état du siège 12 pour le passager P.

La mémoire 26 est propre à mémoriser pour chaque ensemble siège 12/liseuse 14 auquel le système de contrôle 15 est associé des données et notamment la donnée relative au siège 12 auquel la liseuse 14 appartient. En particulier, la mémoire 26 mémorise un identifiant du siège 12 auquel la liseuse 14 appartient.

Le récepteur 28 est propre à recevoir des données.

Le récepteur 28 est, par exemple, une antenne.

A titre d'illustration, le récepteur 28 est une antenne propre à recevoir une donnée via une communication par onde radioélectrique.

L'unité de contrôle 30 est propre à contrôler la source lumineuse 24.

Un tel contrôle est un contrôle en fréquence et/ou en puissance.

Le dispositif de contrôle 10 est propre à mettre en oeuvre un procédé de contrôle de l'occupation des sièges 12 par le passager P.

Selon l'exemple proposé, le dispositif 10 de contrôle de l'occupation des sièges 12 comprend chaque liseuse 14 de chaque siège 12, le système de contrôle 15 des liseuses 14 et le contrôleur 16.

Le contrôleur 16 comprend un récepteur 34, une base de données 36, une unité de traitement de données 38 et un émetteur 40.

Le contrôleur 16 est, par exemple, un serveur distant en dehors du véhicule 8 ou un serveur intégré au véhicule 8.

Dans l'exemple de la figure 1, le contrôleur 16 est un serveur distant en dehors du véhicule 8.

Le récepteur 34 est propre à recevoir la donnée relative au siège 12 comprenant l'identifiant du siège 12 ainsi qu'un identifiant du passager P depuis l'appareil électronique 18 du passager P via un signal électromagnétique ou optique ou sans-fil. Le récepteur 34 est, par exemple, une antenne propre à recevoir une donnée via, par exemple, une communication par onde radioélectrique.

Le récepteur 34 est, en outre, propre à recevoir une requête de réservation du siège 12 par le passager P.

La base de données 36 associe une donnée relative à chaque siège 12 réservé par un passager P à l'identifiant du passager P ayant réservé le siège 12. La base de données 36 associe, par exemple, l'identifiant de chaque siège 12 réservé par un passager P à l'identifiant du passager P ayant réservé le siège 12.

L'unité de traitement de données 38 est propre à recevoir la donnée relative au siège 12 ainsi qu'un identifiant du passager P depuis le récepteur 34. L'unité de traitement de données 38 est, en outre, propre à comparer l'identifiant du siège 12 avec les identifiants des sièges 12 de la base de données 36 et l'identifiant de passager P avec les identifiants de passagers P de la base de données 36.

L'unité de traitement de données 38 est propre, en outre, à recevoir la requête de réservation du siège 12 par le passager P depuis le récepteur 34.

L'unité de traitement de données 38 est, en outre, propre à générer la donnée relative à l'état du siège du siège 12 pour le passager P.

Lorsque le siège 12 est réservé et lorsque l'identifiant du passager P correspond avec l'identifiant du passager P ayant réservé le siège 12, la donnée relative à l'état du siège 12 est une donnée d'autorisation de l'utilisation du siège 12 par le passager P.

Lorsque le siège 12 est réservé et lorsque l'identifiant du passager P est différent de l'identifiant du passager P ayant réservé le siège 12, la donnée relative à l'état du siège 12 est une donnée d'interdiction de l'utilisation du siège 12 par le passager P.

Lorsque le siège 12 est réservé, lorsque l'identifiant du passager P est différent de l'identifiant du passager P ayant réservé le siège 12, l'unité de traitement de données 38 est adapté, en outre, pour générer au moins une donnée de localisation d'un autre siège 12 non réservé.

Lorsque le siège 12 n'est pas réservé, la donnée relative à l'état du siège 12 est une donnée indicatrice de la non-réservation du siège 12.

L'unité de traitement de données 38 est propre, en outre, si le siège 12 n'est pas réservé et si l'unité de traitement de données 38 reçoit une requête de réservation du siège 12 par le passager, à modifier la base de données 36 pour y associer l'identifiant du siège 12 et l'identifiant du passager P.

L'émetteur 40 est propre à émettre la donnée relative à l'état du siège 12 vers le système de contrôle 15 via un signal électromagnétique.

L'émetteur 40 est, par exemple, une antenne propre à émettre une donnée via, par exemple, une communication par onde radioélectrique. L'émetteur 40 est, en outre, propre à émettre la donnée de localisation d'un autre siège 12 non-réservé à l'appareil électronique du passager P.L'appareil électronique 18 du passager P comprend une mémoire 44, une caméra 46, un émetteur 48 et un récepteur 50.

La mémoire 44 de l'appareil électronique 18 conserve un identifiant du passager P auquel appartient l'appareil électronique 18.

La caméra 46 est propre à recevoir la donnée relative au siège 12. En particulier, la caméra 46 est propre à recevoir la donnée relative au siège 12 selon la technique de communication optique sans fil, la technique de communication optique sans fil étant la technique VLC.

Ainsi, la caméra 46 est propre à recevoir au moins un signal lumineux émis par la source lumineuse 24 de la liseuse 14.

L'émetteur 48 de l'appareil électronique 18 est propre à émettre la donnée relative au siège 12, notamment l'identifiant du siège 12, et l'identifiant du passager P auquel appartient l'appareil électronique 18 vers le contrôleur 16 via un signal électromagnétique. L'émetteur 48 est, par exemple, une antenne adaptée à émettre une donnée via, par exemple, une communication par onde radioélectrique.

L'émetteur 48 de l'appareil électronique 18 est, en outre, propre à émettre la requête de réservation du siège 12 par le passager P vers le contrôleur 16.

Le récepteur 50 de l'appareil électronique 18 est propre à recevoir la donnée de localisation d'un autre siège non-réservé par le contrôleur 16 via un signal électromagnétique. Le récepteur 50 est, par exemple, une antenne adaptée à recevoir une donnée via, par exemple, une communication par onde radioélectrique.

Selon un exemple, l'appareil électronique 18 est un terminal mobile intelligent, tel un smartphone, et le contrôleur 16 est un serveur distant.

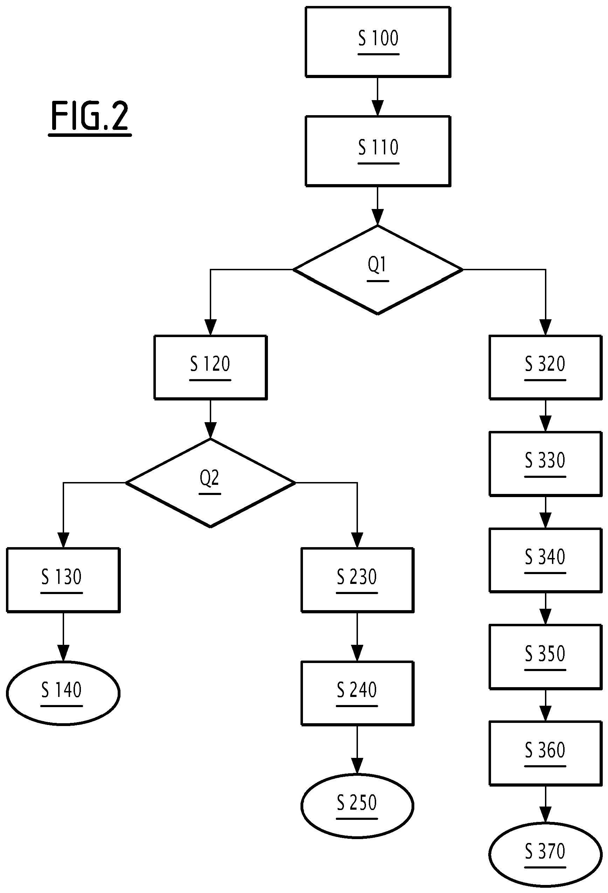

Le fonctionnement du dispositif de contrôle 10 est maintenant décrit en référence à la figure 2 qui est un ordinogramme d'un exemple de mise en œuvre d'un procédé de contrôle de l'occupation des sièges 12 d'un véhicule par des passagers P est décrit.

Dans la suite, il est distingué un premier passager PA d'un deuxième passager PB. Comme mentionné précédemment, il est distingué également le premier siège 12A du deuxième siège 12B, le deuxième siège 12B n'étant pas réservé.

Le procédé comportant des étapes de tests, il sera présenté selon trois exemples de mise en œuvre permettant de décrire l'ensemble des cas possibles.

Le premier passager PA souhaite utiliser le premier siège 12A.

Selon un premier exemple de mise en œuvre du procédé, le premier siège 12A est réservé par le premier passager PA.

Lors d'une première étape S100, la source lumineuse 24 de la liseuse 14 du siège 12A émet au moins une donnée relative au siège 12A vers l'appareil électronique 18 du premier passager PA. La source lumineuse 24 émet, par exemple, selon une technique de communication optique sans fil, via un signal lumineux l'identifiant du premier siège 12A vers la caméra 46 de l'appareil électronique 18 du passager PA. La technique de communication optique sans fil est la technique de communication par lumière visible.

Lors d'une deuxième étape S110, l'appareil électronique 18 émet l'identifiant du premier siège 12A et l'identifiant du premier passager PA vers le contrôleur 16. Le contrôleur 16 reçoit l'identifiant du premier siège 12A et l'identifiant du premier passager PA émis par l'appareil électronique.

Après la deuxième étape S110 a lieu une troisième étape Q1, dans laquelle l'unité de traitement de données 38 du contrôleur 16 vérifie dans la base de données 36 si le premier siège 12A est réservé. Si le premier siège 12A est réservé, ce qui est le cas dans le premier exemple, l'étape suivante est une quatrième étape S120.

Si le premier siège 12A n'est pas réservé, le procédé se déroule selon le troisième exemple de mise en œuvre du procédé décrit ultérieurement et l'étape suivante est une étape S320.

Selon le premier exemple de mise en œuvre du procédé, l'étape suivante est donc la quatrième étape S120.

Lors de la quatrième étape S120, l'unité de traitement de données 38 compare l'identifiant du premier passager PA avec l'identifiant du passager P ayant réservé le premier siège 12A.

Après la quatrième étape S120 a lieu une cinquième étape Q2, au cours de laquelle si lors de l'étape 120 l'identifiant du passager PA est l'identifiant du passager ayant réservé le siège 12A, il est choisi la mise en œuvre par le procédé d' une sixième étape S130 et si lors de l'étape 120 l'identifiant du passager PA n'est pas l'identifiant du passager ayant réservé le siège 12A, le procédé se déroule selon le deuxième exemple de mise en œuvre du procédé décrit ultérieurement et il est choisi la mise en œuvre par le procédé d'une étape S230.

L'identifiant du passager P est, dans ce premier exemple de mise en œuvre du procédé, l'identifiant du premier passager PA. Au cours de l'étape Q2, l'unité de traitement de données 38 génère alors la donnée relative à l'état du siège pour le passager PA correspondant à une autorisation de l'utilisation du premier siège 12A par le premier passager PA. Selon le premier exemple de mise en œuvre du procédé, l'étape suivante mise en œuvre par le procédé est donc la sixième étape S130.

Lors de la sixième étape S130, le contrôleur 16 émet la donnée relative à l'état du siège 12A pour le passager PA, correspondant à l'autorisation de l'utilisation du premier siège 12A par le premier passager PA, vers le système de contrôle 15 des liseuses 14 et/ou vers le dispositif électronique 18.

Lors d'une septième étape S140, le système de contrôle 15 des liseuses 14 contrôle, par exemple, la source lumineuse 24 de la liseuse 14 pour émettre une donnée relative au siège 12A comprenant la donnée relative à l'état du siège 12A indiquant l'autorisation de l'utilisation du premier siège 12A par le premier passager PA à destination du premier passager PA. La source lumineuse 24 émet, par exemple, une lumière d'une couleur verte, visible par le premier passager PA.

Le procédé selon le premier exemple comporte donc la mise en œuvre de sept étapes S100, S110, Q1, S120, Q2, S130 et S140 qui viennent d'être décrites.

Dans ce qui suit, il est décrit un deuxième exemple de mise en œuvre du procédé dans lequel le premier siège 12A est réservé par le deuxième passager PB.

Selon ce deuxième exemple de mise en œuvre du procédé, le procédé comprend également la première étape S100, la deuxième étape S110, la troisième étape Q1, la quatrième étape S120 et la cinquième étape Q2.

Lors de la cinquième étape de test Q2 de ce deuxième exemple de mise en œuvre du procédé, l'identifiant du passager P ayant réservé le premier siège 12A étant l'identifiant du deuxième passager PB, l'unité de traitement de données 38 génère la donnée relative à l'état du siège 12A pour le premier passager PA correspondant à une interdiction de l'utilisation du premier siège 12A par le premier passager PA. L'unité de traitement de données 38 génère également la donnée de localisation d'un autre siège 12 non réservé, tel que, par exemple, le siège 12B. L'étape suivante qui est mise en œuvre par le procédé est donc une huitième étape S230 différente de la sixième étape S130.

Lors de la huitième étape S230, le contrôleur 16 émet la donnée relative à l'état du siège 12A pour le premier passager PA, correspondant à une interdiction de l'utilisation du premier siège 12A par le premier passager PA vers le système de contrôle 15 des liseuses 14 et/ou vers le dispositif électronique 18.

Lors d'une neuvième étape S240, le système de contrôle 15 des liseuses 14 contrôle par exemple la source lumineuse 24 de la liseuse 14 pour émettre une donnée relative au siège 12A comprenant la donnée relative à l'état du siège 12A indiquant l'interdiction de l'utilisation du premier siège 12A par le premier passager PA à destination du premier passager PA. La source lumineuse 24 émet, par exemple, une lumière d'une couleur rouge, visible par le premier passager PA.

Lors d'une dixième étape S250, le contrôleur 16 émet la donnée de localisation du deuxième siège 12B vers l'appareil électronique 18 du premier passager PA.

Le procédé peut par la suite être réitéré avec la deuxième siège 12B.

Le procédé selon le deuxième exemple comporte donc la mise en œuvre de huit étapes S100, S110, Q1, S120, Q2, S230, S240 et S250 qui viennent d'être décrites.

Dans ce qui suit, il est décrit un troisième exemple de mise en œuvre du procédé dans lequel le premier siège 12A n'est pas réservé.

Dans ce troisième exemple de mise en œuvre du procédé, le procédé comprend également la première étape S100, la deuxième étape S110 et la troisième étape Q1.

L'unité de traitement de données 38 génère la donnée relative à l'état du siège 12A correspondant à une donnée indicatrice de la non-réservation du premier siège 12A.

Le siège 12A n'étant pas réservé, après la troisième étape Q1 est mise en œuvre une onzième étape S320 au lieu de la quatrième étape S120.

Lors de la onzième étape S320, le contrôleur 16 émet la donnée indicatrice de la non-réservation du premier siège 12A vers le système de contrôle 15 des liseuses 14 et/ou le dispositif électronique 18.

Lors d'une douzième étape S330, le système de contrôle 15 des liseuses 14 contrôle par exemple la source lumineuse 24 de la liseuse 14 pour émettre une donnée relative au siège 12A comprenant la donnée relative à l'état du siège 12A indiquant la non-réservation du premier siège 12A à destination du premier passager PA. La source lumineuse 24 émet, par exemple, une lumière d'une couleur jaune, visible par le premier passager PA.

Lors d'une treizième étape S340, l'appareil électronique 18 émet une requête de réservation du premier siège 12A par le premier passager PA vers le contrôleur 16. Le contrôleur 16 reçoit la requête de réservation du premier siège 12A par le premier passager PA.

Lors d'une quatorzième étape S350, l'unité de traitement de données 38 modifie la base de données 36 pour y associer l'identifiant du premier siège 12A et l'identifiant du premier passager PA et génère une donnée relative à l'état du siège 12A indiquant une donnée d'autorisation de l'utilisation du premier siège 12A par le premier passager PA.

Lors d'une quinzième étape S360, le contrôleur 16 émet la donnée d'autorisation de l'utilisation du premier siège 12A par le premier passager PA vers le système de contrôle 15 des liseuses 14 et/ou le dispositif électronique 18.

Lors d'une seizième étape S370, le système de contrôle 15 des liseuses 14 contrôle par exemple la source lumineuse 24 de la liseuse 14 pour émettre une donnée relative au siège 12A comprenant la donnée relative à l'état du siège 12A indiquant l'autorisation de l'utilisation du premier siège 12A par le premier passager PA à destination du premier passager PA. La source lumineuse 24 émet, par exemple, une lumière d'une couleur verte, visible par le premier passager PA.

Le procédé selon le troisième exemple comporte donc la mise en œuvre de neuf étapes S100, S110, Q1, S320, S330, S340, S350, S360 et S370 qui viennent d'être décrites.

Le procédé permet ainsi de contrôler l'occupation des sièges 12A et 12B du véhicule 8 par des passagers P. En effet, comme illustré avec les trois exemples, le procédé est compatible avec des configurations de sièges réservables ou non. En outre, le procédé est peu complexe à mettre en œuvre et requiert peu de ressources humaines et/ou matérielles. Le procédé proposé permet à n'importe quel passager P de vérifier et/ou modifier la réservation d'un siège 12 en particulier sans avoir à demander l'assistance d'un agent dédié à cette tâche.

Un tel procédé permet également d'éviter l'implémentation, au sein du véhicule, de capteurs coûteux, complexes et pouvant impliquer l'acquisition de données personnelles du passager, comme par exemple, la détection d'occupation et le contrôle dudit passager par analyse vidéo par caméra.

De fait, la mise en œuvre du procédé suppose simplement de changer le fonctionnement de la liseuse 14 du siège 12.

Un tel procédé permet aussi un vrai contrôle de l'occupation effective des sièges 12 au contraire d'un portique d'accès. En particulier, il est fréquent qu'un passager P se trompe de véhicule lors de l'embarquement sans se tromper de numéro de siège. Cela n'est pas possible avec un tel dispositif de contrôle 10.

Les modes de réalisation du procédé décrit peuvent être combinés pour d'autres procédés de contrôle lorsque ces modes de réalisation sont techniquement compatibles entre eux, et en restant dans l'étendue de l'invention telle que définie par les revendications.

## Revendications

1. Procédé de contrôle de l'occupation des sièges (12) d'un ou plusieurs véhicule(s) (8) par des passagers (P) à l'aide d'un dispositif de contrôle (10) de l'occupation des sièges (12), le véhicule (8) comprenant une pluralité de sièges (12) équipés d'une liseuse (14), le dispositif de contrôle (10) comprenant chaque liseuse (14), un système de contrôle (15) des liseuses (14) et un contrôleur (16),
le procédé comprenant :
- une étape d'émission d'au moins une donnée relative à un siège (12) à destination d'un appareil électronique (18) d'un passager (P) du véhicule (8), la donnée étant émise selon une technique de communication optique sans fil, la technique étant la technique de communication par lumière visible, l'étape d'émission étant mise en œuvre par la liseuse (14) du siège (12) commandée par le système de contrôle (15), dans lequel, lorsque le siège (12) est réservé, le procédé comporte une étape d'émission par le dispositif de contrôle (10) d'une donnée relative à l'état du siège (12) pour le passager (P), ladite donnée étant soit une donnée d'autorisation de l'utilisation du siège (12) par le passager (P) lorsque le passager (P) est le passager ayant réservé le siège (12) soit une donnée d'interdiction de l'utilisation du siège (12) par le passager (P) lorsque le passager est différent du passager ayant réservé le siège (12),
**caractérisé en ce que** la donnée relative au siège (12) comprend un identifiant du siège (12), le procédé comportant également :
- une étape de réception d'un identifiant du passager (P) émis par l'appareil électronique (18) du passager (P) au contrôleur (16) ; et
- une étape de génération de la donnée relative à l'état du siège (12) pour le passager (P) par le contrôleur (16), l'étape de génération comportant une étape de comparaison entre l'identifiant du passager (P) ayant réservé le siège (12) et l'identifiant du passager (P).

2. Procédé selon la revendication 1, dans lequel l'étape d'émission d'une donnée relative à l'état du siège (12) pour le passager (P) est mise en œuvre par affichage d'un signal lumineux à destination du passager (P).

3. Procédé selon la revendication 1 ou 2, comprenant, en outre, lorsque le siège (12) n'est pas réservé, une étape d'émission d'une donnée relative à l'état du siège (12), indicatrice de la non-réservation du siège (12).

4. Procédé selon l'une quelconque des revendications 1 à 3, comprenant, en outre, lorsque le siège (12) n'est pas réservé, une étape de réception par le contrôleur (16) d'une requête de réservation du siège (12) par le passager (P) et une étape d'association par le contrôleur (16) de l'identifiant du siège (12) avec l'identifiant du passager (P).

5. Procédé selon l'une quelconque des revendications 1 à 4, dans lequel, lorsque le passager (P) est différent du passager (P) ayant réservé le siège (12), le procédé comporte, en outre, une étape d'émission par le contrôleur (16) vers l'appareil électronique (18) du passager (P) d'au moins une donnée de localisation d'un autre siège (12) non réservé.

6. Procédé selon l'une quelconque des revendications 1 à 5, dans lequel l'appareil électronique (18) est un terminal mobile intelligent, tel un smartphone, et le contrôleur (16) est un serveur distant.

7. Dispositif de contrôle (10) de l'occupation des sièges (12) d'un véhicule (8) par des passagers (P), le véhicule (8) comportant une pluralité de sièges (12) équipés d'une liseuse (14), le dispositif de contrôle (10) comprenant chaque liseuse (14), un système (15) de contrôle des liseuses (14) et un contrôleur (16), le système de contrôle (15) étant propre à commander chaque liseuse (14) d'un siège (12) pour émettre des données relatives au siège (12) à destination d'un appareil électronique (18) d'un passager du véhicule (8), les données étant émises selon une technique de communication optique sans fil, la technique étant la technique de communication par lumière visible,
dans lequel le dispositif de contrôle (10) est configuré pour émettre une donnée relative à l'état du siège (12) pour le passager (P) lorsque le siège (12) est réservé, ladite donnée étant soit une donnée d'autorisation de l'utilisation du siège (12) par le passager (P) lorsque le passager (P) est le passager ayant réservé le siège (12) soit une donnée d'interdiction de l'utilisation du siège (12) par le passager (P) lorsque le passager est différent du passager ayant réservé le siège (12),
**caractérisé en ce que** la donnée relative au siège (12) comprend un identifiant du siège (12), le contrôleur (16) étant configuré pour recevoir un identifiant du passager (P) émis par l'appareil électronique (18) du passager (P) et pour générer la donnée relative à l'état du siège (12) pour le passager (P),
le contrôleur (16) étant destiné à comparer l'identifiant du passager (P) ayant réservé le siège (12) et l'identifiant du passager (P) pour générer la donnée relative à l'état du siège (12) pour le passager (P).

## Patentansprüche

1. Verfahren zur Steuerung der Belegung von Sitzen (12) eines oder mehrerer Fahrzeuge (8) durch Fahrgäste (P) mit Hilfe einer Vorrichtung zur Steuerung (10) der Belegung der Sitze (12), wobei das Fahrzeug (8) eine Mehrzahl von Sitzen (12) umfasst, die mit einem Lesegerät (14) ausgestattet sind, wobei die Steuerungsvorrichtung (10) jedes Lesegerät (14), ein Steuerungssystem (15) für die Lesegeräte (14) und eine Steuerung (16) umfasst,
wobei das Verfahren umfasst:
- einen Schritt des Sendens wenigstens einer Information, die sich auf einen Sitz (12) bezieht, an ein elektronisches Gerät (18) eines Fahrgastes (P) des Fahrzeugs (8), wobei die Information mittels einer drahtlosen optischen Kommunikationstechnik gesendet wird, wobei es sich bei dieser Technik um die Kommunikationstechnik durch sichtbares Licht handelt, wobei der Sendeschritt durch das Lesegerät (14) des Sitzes (12) ausgeführt wird, der durch das Steuerungssystem (15) gesteuert wird, wobei, wenn der Sitz (12) reserviert ist, das Verfahren einen Schritt des Sendens einer Information zum Zustand des Sitzes (12) für den Fahrgast (P) durch die Steuerungsvorrichtung (10) umfasst, wobei die Information entweder eine Information zur Freigabe der Nutzung des Sitzes (12) durch den Fahrgast (P) ist, wenn der Fahrgast (P) der Fahrgast ist, der den Sitz (12) reserviert hat, oder eine Information zum Verbot der Nutzung des Sitzes (12) durch den Fahrgast (P) ist, wenn der Fahrgast nicht der Fahrgast ist, der den Sitz (12) reserviert hat,
**dadurch gekennzeichnet, dass** die Information zum Sitz (12) eine Kennung des Sitzes (12) umfasst, wobei das Verfahren ferner umfasst:
- einen Schritt des Empfangens einer vom elektronischen Gerät (18) des Fahrgastes (P) an die Steuerung (16) gesendeten Kennung des Fahrgastes (P); und
- einen Schritt des Erzeugens der Information zum Zustand des Sitzes (12) für den Fahrgast (P) durch die Steuerung (16), wobei der Erzeugungsschritt einen Schritt des Vergleichens der Kennung des Fahrgastes (P), der den Sitz (12) reserviert hat, mit der Kennung des Fahrgastes (P) umfasst.

2. Verfahren nach Anspruch 1, wobei der Schritt des Sendens einer Information zum Zustand des Sitzes (12) an den Fahrgast (P) durch Anzeigen eines Lichtsignals für den Fahrgast (P) durchgeführt wird.

3. Verfahren nach Anspruch 1 oder 2, welches ferner, wenn der Sitz (12) nicht reserviert ist, einen Schritt des Sendens einer Information zum Zustand des Sitzes (12) umfasst, die anzeigt, dass der Sitz (12) nicht reserviert ist.

4. Verfahren nach einem der Ansprüche 1 bis 3, das ferner, wenn der Sitz (12) nicht reserviert ist, einen Schritt umfasst, bei dem die Steuerung (16) eine Anfrage zur Reservierung des Sitzes (12) durch den Fahrgast (P) empfängt, und einen Schritt umfasst, bei dem die Steuerung (16) die Kennung des Sitzes (12) mit der Kennung des Fahrgastes (P) verknüpft.

5. Verfahren nach einem der Ansprüche 1 bis 4, wobei, wenn der Fahrgast (P) nicht der Fahrgast (P) ist, der den Sitzplatz (12) reserviert hat, das Verfahren ferner einen Schritt umfasst, bei dem die Steuerung (16) wenigstens eine Standortinformation eines anderen nicht reservierten Sitzplatzes (12) an das elektronische Gerät (18) des Fahrgastes (P) sendet.

6. Verfahren nach einem der Ansprüche 1 bis 5, wobei das elektronische Gerät (18) ein mobiles intelligentes Endgerät, wie beispielsweise ein Smartphone, ist und die Steuerung (16) ein Fernserver ist.

7. Vorrichtung zur Steuerung (10) der Belegung von Sitzen (12) eines Fahrzeugs (8) durch Fahrgäste (P), wobei das Fahrzeug (8) eine Mehrzahl von Sitzen (12) umfasst, die mit einem Lesegerät (14) ausgestattet sind, wobei die Steuerungsvorrichtung (10) jedes Lesegerät (14), ein System (15) zur Steuerung der Lesegeräte (14) und eine Steuerung (16) umfasst, wobei das Steuerungssystem (15) dazu ausgelegt ist, jedes Lesegerät (14) eines Sitzes (12) so zu steuern, dass es Informationen zum Sitz (12) an ein elektronisches Gerät (18) eines Fahrgastes des Fahrzeugs (8) sendet, wobei die Informationen mittels einer drahtlosen optischen Kommunikationstechnik übertragen werden, wobei es sich bei dieser Technik um die Kommunikationstechnik durch sichtbares Licht handelt,
wobei die Steuerungsvorrichtung (10) dazu ausgebildet ist, eine Information zum Zustand des Sitzes (12) an den Fahrgast (P) zu übertragen, wenn der Sitz (12) reserviert ist, wobei die Information entweder eine Information zur Freigabe der Nutzung des Sitzes (12) durch den Fahrgast (P) ist, wenn der Fahrgast (P) der Fahrgast ist, der den Sitz (12) reserviert hat, oder eine Information zum Verbot der Nutzung des Sitzes (12) durch den Fahrgast (P) ist, wenn der Fahrgast nicht der Fahrgast ist, der den Sitz (12) reserviert hat,
**dadurch gekennzeichnet, dass** die Information zum Sitz (12) eine Kennung des Sitzes (12) umfasst, wobei die Steuerung (16) dazu ausgebildet ist, eine vom elektronischen Gerät (18) des Fahrgastes (P) ausgegebene Kennung des Fahrgastes (P) zu empfangen und die Information zum Zustand des Sitzes (12) für den Fahrgast (P) zu erzeugen, wobei die Steuerung (16) dazu bestimmt ist, die Kennung des Fahrgastes (P), der den Sitzplatz (12) reserviert hat, und die Kennung des Fahrgastes (P) zu vergleichen, um die Information zum Zustand des Sitzplatzes (12) für den Fahrgast (P) zu erzeugen.

## Claims

1. Method for checking the seat occupancy (12) of one or more vehicle(s) (8) by passengers (P) using a checking device (10) for checking seat occupancy (12), the vehicle (8) comprising a plurality of seats (12) equipped with a reading light (14), the checking device (10) comprising each reading light (14), a control system (15) for checking the reading lights (14) and a controller (16),
the method comprising:
- a step of transmitting at least one piece of data relating to a seat (12) to an electronic device (18) of a passenger (P) of the vehicle (8), the data being transmitted according to a wireless optical communication technique, the technique being the visible light communication technique, the transmission step being implemented by the reading light (14) of the seat (12) controlled by the control system (15), wherein, when the seat (12) is reserved, the method includes a step of transmitting by the control device (10) data relating to the state of the seat (12) for the passenger (P), said data being either data authorising the use of the seat (12) by the passenger (P) when the passenger (P) is the passenger who reserved the seat (12) or data prohibiting the use of the seat (12) by the passenger (P) when the passenger is different from the passenger who reserved the seat (12),
**characterised in that** the data relating to the seat (12) comprises an identifier of the seat (12), the method also including:
- a step of receiving an identifier of the passenger (P) transmitted by the electronic device (18) of the passenger (P) to the controller (16); and
- a step of generating the data relating to the state of the seat (12) for the passenger (P) by the controller (16), the generating step including a step of comparing the identifier of the passenger (P) who reserved the seat (12) and the identifier of the passenger (P).

2. Method according to claim 1, wherein the step of transmitting data relating to the state of the seat (12) for the passenger (P) is implemented by displaying a light signal to the passenger (P).

3. Method according to claim 1 or 2, further comprising, when the seat (12) is not reserved, a step of transmitting data relating to the state of the seat (12), indicating the non-reservation of the seat (12).

4. Method according to any one of claims 1 to 3, further comprising, when the seat (12) is not reserved, a step of receiving by the controller (16) a seat reservation request (12) by the passenger (P) and a step of associating by the controller (16) the seat identifier (12) with the passenger identifier (P).

5. Method according to any one of claims 1 to 4, wherein, when the passenger (P) is different from the passenger (P) who reserved the seat (12), the method further includes a step of transmitting by the controller (16) to the electronic device (18) of the passenger (P) at least one piece of data on the location of another unreserved seat (12).

6. Method according to any one of claims 1 to 5, wherein the electronic device (18) is a smart mobile terminal, such as a smartphone, and the controller (16) is a remote server.

7. Control evice (10) for controlling the occupancy of the seats (12) of a vehicle (8) by passengers (P), the vehicle (8) including a plurality of seats (12) equipped with a reading light (14), the control device (10) comprising each reading light (14), a control system (15) for controlling the reading lights (14) and a controller (16), the control system (15) being able to control each reading light (14) of a seat (12) to transmit data relating to the seat (12) to an electronic device (18) of a passenger of the vehicle (8), the data being transmitted according to a wireless optical communication technique, the technique being the visible-light communication technique,
wherein the control device (10) is configured to transmit data relating to the state of the seat (12) for the passenger (P) when the seat (12) is reserved, said data being either data authorising the use of the seat (12) by the passenger (P) when the passenger (P) is the passenger who reserved the seat (12) or data prohibiting use of the seat (12) by the passenger (P) when the passenger is different from the passenger who reserved the seat (12),
**characterised in that** the data relating to the seat (12) comprises an identifier of the seat (12), the controller (16) being configured to receive an identifier of the passenger (P) transmitted by the electronic device (18) of the passenger (P) and to generate the data relating to the state of the seat (12) for the passenger (P),
the controller (16) being intended to compare the identifier of the passenger (P) who reserved the seat (12) and the identifier of the passenger (P) to generate the data relating to the state of the seat (12) for the passenger (P).
